# EUROPEAN PATENT APPLICATION

(11) **EP 2 031 793 A1**
(43) Date of publication of application: **04.03.2009**
(21) Application number: 07721754.5
(22) Date of filing: 19.06.2007
(51) Int. Cl.: H04L 9/32

(54) **FRAMEWORK OF MANAGING NETWORK SECURITY AND INFORMATION PROCESSING METHOD THEREOF**

(30) Priority: 19.06.2006 CN 200610086418; 13.12.2006 CN 200610167202
(71) Applicant: Huawei Technologies Co., Ltd., Longgang District, Shenzhen Guangdong 518129 (CN)
(72) Inventor: MA, Yuzhi, Shenzhen Guangdong 518129 (CN); MIAO, Fuyou, Shenzhen Guangdong 518129 (CN)
(74) Representative: Gulde Hengelhaupt Ziebig & Schneider
(86) International application number: PCT/CN2007/070134
(87) International publication number: WO 2008/000177

(57) **Abstract**

The present disclosure provides a management network security framework and its information processing method. The management network security framework under the present disclosure includes a management station and a managed device. The method under the present disclosure includes: a secure transfer channel is established between the management station and the managed device; the managed device authenticates the management station; and information is exchanged between the management station and the managed device through the secure transfer channel. The embodiment of the present disclosure combines the AAA system, the upper-layer management protocol and the lower-layer security protocol organically.

## Description

### FIELD

The present disclosure relates to the network communication field, and in particular, to a management network security framework and its information processing method.

### BACKGROUND

With rapid development of the Internet and the emergence of new technologies and applications, the Internet becomes an important platform for people to learn knowledge and information, communicate ideas, tap potentials and do entertainment. However, the network security problems are bringing about massive losses every year. Network security problems are challenging the current economic and social stability and harassing people's work, study and life grimly. They become urgent problems to be solved with respect to the Internet.

Network security problems come in three types:
1. Information modifying: The packets are modified illegally by a malicious node during transmission;
2. Information disclosing: The packets are intercepted and manipulated illegally during transmission; and
3. Identity Masquerade: A malicious node masquerades as a legal node to join the protocol communication.

The traditional management network security is based on the security mechanism of the management protocol. Namely, the management protocol provides confidentiality and integrity assurance for protocol data, and the security mechanisms such as user authentication and access control. For example, The Simple Network Management Protocol (SNMP) R3 uses its own User-based Security Model (USM) and View-based Access Control Model (VACM) to provide relevant security features.

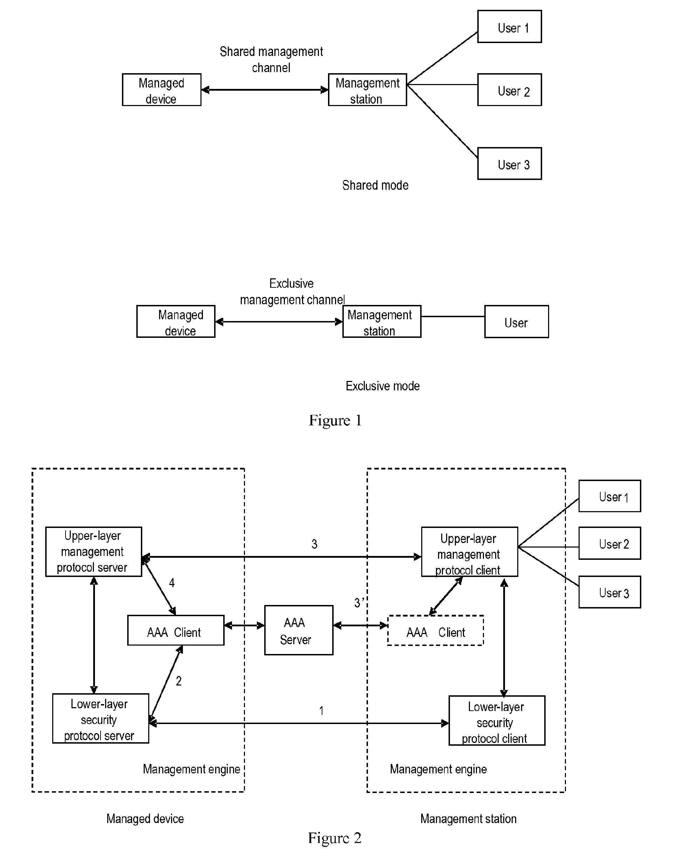

The traditional management network security framework comes in two modes: shared, and exclusive, as shown in Figure 1. In the shared mode in Figure 1, a management station is used by multiple users. Such users share a management channel. In order to provide security assurance for every user, the management protocol needs to carry the security parameters such as packet confidentiality, packet integrity, user authentication and access control. A managed device needs to authenticate and authorize every user in addition to ensure the confidentiality and integrity of the management packets.

In the exclusive mode in Figure 1, a management station is used by one user, and the management channel is used exclusively by the user, thus forming a one-to-one binding relation between the management channel and the user. If the management channel itself can provide identity authentication, the management protocol does not need to carry user information, and the managed device needs only to authenticate and authorize the management station.

A solution to management network security in the related art is: On the basis of the shared mode in Figure 1, a Secure Shell (SSH) is applied to ensure confidentiality and integrity of the management packets. The basic process of the solution includes the steps as described hereinafter.

Step 1: An SSH session channel is established.

When an SNMP user needs to send an SNMP request through the SNMP engine to access a device, the SNMP user uses an SSH transfer protocol to establish a secure transfer connection for the SNMP user first. The secure transfer connection provides data confidentiality and integrity assurance. Afterward, the SNMP user is authenticated through an SSH user authentication protocol. If the authentication succeeds, the SSH connection protocol will establish a communication channel between the SNMP engines, and correlate the SNMP user with the established communication channel. As a result, an SSH session channel is established.

Step 2: An SSH subsystem is started.

After the SSH session channel is established, the SNMP is started by the SNMP engine as a subsystem of the SSH.

Step 3: Exchanging management information.

After the SSH session channel is established and the SSH subsystem is started, management information can be exchanged between the management station and the managed device through the SSH protocol.

Step 4: A user is added.

When a new SNMP user who uses the same management station engine needs to access the same device mentioned above, the new SNMP user performs step 1 to step 3, and then needs to establish a new independent SSH session channel and a new independent SSH subsystem.

In the process of implementing the present disclosure, the inventor finds out that in the solution under the related art, in order to correlate a communication channel with an SNMP user, the communication channels between the management station and the same managed device increase with the rise of user quantity, and the system overhead is high.

### SUMMARY

Embodiments of the present disclosure provide a management network security framework and its information processing method, so that a secure transfer channel can be established between the management station and the managed device, and information can be exchanged between the management station and the managed device through the secure transfer channel.

The objectives of the present disclosure are achieved through a management network security framework and method for processing information of a management network security framework.

A management network security framework includes:
a management station, adapted to: establish a secure transfer channel between the management station and the managed device; and exchange information with the managed device through the secure transfer channel; and
managed devices, adapted to: establish a secure transfer channel between the management station and the managed devices; authenticate the management station; and exchange information with the management station through the secure transfer channel.

A method for processing information of a management network security framework includes:
establishing a secure transfer channel between the management station and the managed device, and authenticating the management station; and
using the secure transfer channel to exchange information between the management station and the managed device.

The technical solution of the present disclosure reveals that, a secure transfer channel is established between the management station and the managed device; the managed device authenticates the management station; and information is exchanged between the management station and the managed device through the secure transfer channel. In this way, only one communication channel is required between the management station and the same managed device, thus saving system overhead.

### BRIEF DESCRIPTION OF THE DRAWINGS

Figure 1 shows the structure of a management security framework in the related art;

Figure 2 shows the structure of a management network security framework in an embodiment of the present disclosure;

Figure 3 shows the process of processing information of a management network security framework in an embodiment of the present disclosure; and

Figure 4 shows the process of establishing at least two management channels in a transfer channel of the lower-layer security protocol in an embodiment of the present disclosure.

### DETAILED DESCRIPTION

Embodiments of the present disclosure provide a management network security framework and its information processing method. According to the embodiments, layering of the upper-layer management protocol and the lower-layer security protocol is performed, a Authentication Authorization Accounting (AAA) system is introduced into the security framework, and authentication is performed for the management station through the lower-layer security protocol and authentication and authorization is performed for the user through the upper-layer management protocol. Accordingly, a layered management network security framework is provided.

As shown in Figure 2, a management network security framework in an embodiment of the present disclosure includes a management station, an AAA server and managed devices. The functions of each unit are described below:
The management station corresponds to one or more managed devices. Security parameters are negotiated between a lower-layer security protocol client in the management station and a lower-layer security protocol server in the managed device, and the authentication information for authenticating the management station is carried in the negotiation. The management station establishes a secure transfer channel between the management station and the managed device; creates management channels between the management station and the managed device through a lower-layer security protocol channel; performs authentication and authorization for the user on the upper-layer management protocol. A management station contains a lower-layer security protocol client, an upper-layer management protocol client and an AAA client;
The lower-layer security protocol client negotiates security parameters with the lower-layer security protocol server in the managed devices; creates a lower-layer security protocol transfer channel with the managed device, wherein the authentication information for authenticating the management station is carried in the negotiation;
The upper-layer management protocol client sends a packet carrying authentication information and/or authorization information to the upper-layer management protocol server in the managed devices through a lower-layer security protocol transfer channel; and, after performing user information authentication and access control authorization for the user, performs information interaction with the managed device by using the lower-layer security protocol transfer channel as initiated by the user. An upper-layer management protocol client includes a management channel processing module;
The management channel processing module: creates and maintains the management channels in the lower-layer security protocol transfer channel. One security transfer channel can carry one or more management channels. The management channels may be in either the host-user mode or the host-host mode. The management channel in the host-user mode is designed to transfer the user-related management information; and the management channel in the host-host mode is designed to transfer the user-unrelated management information such as alarms and logs;
The AAA client sends a packet carrying the authentication information and/or authorization information to the AAA server, and requests to authenticate and/or authorize the user;
The Managed device sends a management station authentication request to the AAA server after negotiating the security parameters between the lower-layer security protocol server and the lower-layer security protocol client in the management station; and establishes a lower-layer security protocol transfer channel between the managed device and the management station. The Managed device includes an upper-layer management protocol server, an AAA client, and a lower-layer security protocol client;
The upper-layer management protocol server receives a packet carrying the authentication information and/or authorization information from the upper-layer management protocol client in the management station; sends an authentication packet and/or an authorization packet to the AAA client; and, after performing user information authentication and access control authorization for the user, performs information interaction with the management station by using the lower-layer security protocol transfer channel as initiated by the user;
The lower-layer security protocol server negotiates the security parameters with the lower-layer security protocol client in the management station; sends a management station authentication request to the AAA client; and creates a lower-layer security protocol transfer channel between the lower-layer security protocol server and the management station;
The AAA client transfers the authentication request sent by the lower-layer security protocol server to the AAA server; transfers the packet carrying the authentication information and/or authorization information sent by the upper-layer management protocol server to the AAA server; and requests to authenticate and/or authorize the user; and
The AAA server authenticates the management station according to the received authentication request; performs user information authentication or access control authorization for the user according to the packet carrying the authentication information or authorization information.

The previous managed device also includes an AAA server, which is configured to: authenticate the management station according to the authentication request sent by the lower-layer security protocol server; and perform user information authentication and/or access control authorization for the user according to the packet carrying the authentication information and/or authorization information sent by the upper-layer management protocol server.

The upper-layer management protocols refer to SNMP, NETCONF (network configuration protocol), and new upper-layer management protocols that will emerge in the future. Lower-layer security protocols refer to Transport Layer Security (TLS), SSH and new lower-layer security management protocols that will emerge in the future. AAA servers refer to Diameter server, Radius server and new authentication & authorization servers that will emerge in the future. AAA clients refer to Diameter client, Radius client, and so on.

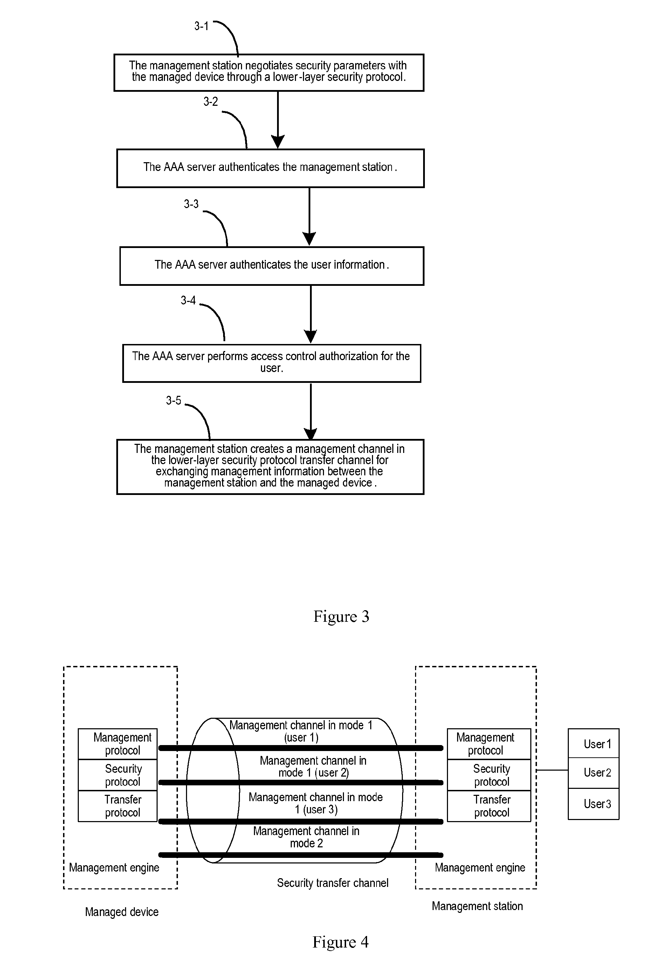

As shown in Figure 3, the process of processing information of a management network security framework in an embodiment of the present disclosure includes the steps as described below.

Steps 3-1: The management station negotiates security parameters with the managed device through a lower-layer security protocol.

Before the upper-layer management protocol begins working, the lower-layer security protocol client in the management station negotiates security parameters with the lower-layer security protocol server in the managed devices to determine the security parameters required for ensuring data confidentiality and integrity, including keys and encryption algorithms. The previous negotiation process also determines the authentication information, for example, management engine identifier for authenticating the management station.

Step 3-2: The AAA server authenticates the management station.

After the security parameters are negotiated between the management station and the managed device through a lower-layer security protocol, the lower-layer security protocol server in the managed devices obtains the management station authentication information, and sends a management station authentication request to the AAA server. If the authentication fails, the lower-layer security protocol server will notify the authentication failure causes to the lower-layer security protocol client, and terminate the subsequent operation. If the authentication succeeds, a lower-layer security protocol transfer channel will be established between the lower-layer security protocol client in the management station and the lower-layer security protocol server in the managed devices, and will be available to the upper-layer management protocol.

Step 3-3: The AAA server authenticates the user information.

After the lower-layer security protocol transfer channel is established, the management station needs to authenticate the user information to ensure that the user identity is legal to the management station. There are two authentication modes:
Authentication mode 1: corresponds to mark 3 and mark 4 in Figure 2. The upper-layer management protocol client in the management station sends a packet carrying the authentication information to the upper-layer management protocol server in the managed devices through a lower-layer security protocol transfer channel. The authentication information carries a user group identifier and/or a user identifier. After receiving the previous authentication packet, the upper-layer management protocol server transfers the authentication packet to the AAA client in the managed devices, requesting the AAA server through the AAA client to authenticate the user;
Authentication mode 2: corresponds to mark 3' in Figure 2. The AAA client in the management station sends a packet carrying the authentication information to the AAA server, requesting to authenticate the user. The authentication information includes a user group identifier and/or a user identifier.

If the previous authentication request for the user fails, the upper-layer management protocol will terminate the management operations involved in the user authentication; otherwise, the procedure proceeds to step 3-4.

Step 3-4: The AAA server performs access control authorization for the user.

After the lower-layer security management channel is established and the user information is authenticated, the AAA server will check the user access control rights through an upper-layer management protocol in either of the following two modes:
Mode 1: corresponds to mark 3 and mark 4 in Figure 2. The upper-layer management protocol client in the management station sends a packet carrying the authorization information to the upper-layer management protocol server in the managed devices through a lower-layer security protocol transfer channel. The authorization information carries a user group identifier and/or a user identifier, and access control information. After receiving the previous authorization packet, the upper-layer management protocol server transfers the authorization packet to the AAA client in the managed devices, requesting the AAA server through the AAA client to authorize the user;
Mode 2: corresponds to mark 3' in Figure 2. The AAA client sends a packet carrying the authorization information to the AAA server directly, requesting to authorize the user. The authentication information includes: user group identifier and/or user identifier, and access control information.

If the previous authorization request for the user fails, the upper-layer management protocol will terminate the management operations involved in the user authorization; otherwise, the procedure proceeds to step 3-5.

Step 3-5: The management station creates management channels in the lower-layer security protocol transfer channel for exchanging management information between the management station and the managed device.

After the lower-layer security protocol transfer channel is established and the user is authenticated and authorized successfully, as initiated by the user, the management station exchanges management information with the managed device through the lower-layer security protocol transfer channel in the mode specified by the protocol.

The lower-layer security protocol transfer channel may be shared by multiple users under the same management station. For the users with different access control rights under the same management station, it is necessary to repeat step 3-3 and step 4-4.

In the practical application, the AAA server and the AAA client under the present disclosure may exist as logical functions only instead of physical entities. In this case, the work involved in authentication and authorization is implemented by the managed device.

The management station may establish management channels in the lower-layer security protocol transfer channel. One security transfer channel can carry one or more management channels, and the management channels are established and maintained through the management protocol. The management channels under the present disclosure may be in either the host-user mode (mode 1) or the host-host mode (mode 2). Figure 4 shows the process of establishing management channels in a transfer channel of the lower-layer security protocol in an embodiment of the present disclosure. In Figure 4, management protocols refer to SNMP, NETCONF (network configuration protocol), SYSLOG, IPFIX, and so on; security protocols refer to TLS, DTLS, SSH, and so on; transfer protocols refer to TCP, UDP, and so on.

The management channel in the host-user mode is designed to transfer the user-related management information, which is about the configuration operations such as SNMP read operation, SNMP write operation, NETCONF read command, and NETCONF edit command. For example, if an SNMP read operation is initiated by a user, the managed device must authenticate the user and check whether the user has the right of initiating the operation. Therefore, this type of operation is user-related. The user authentication is unrelated to the management station or the managed device. The authentication of each user is independent. Therefore, the user authentication cannot be bound to the lower-layer security protocol transfer channel, and can only be bound to each management channel.

The management channel in the host-host mode is designed to transfer the user-unrelated management information such as alarms and logs. Such management information includes: SNMP alarm information, NETCONF alarm information, and SYSLOG log information. The management channel in the host-host mode is not directly related to users, but a credit relationship must exist between the hosts (management station and managed devices). Therefore, the management channel in the host-host mode must adopt the host-to-host authentication mode. Moreover, the authentication of the entities at both sides is bound to both the management channel and the lower-layer security protocol transfer channel, for example, the TLS host authentication is applied directly. The authenticated identity is bound to both the lower-layer security protocol transfer channel and the management channel in the host-host mode.

A lower-layer security protocol transfer channel may include multiple management channels in the host-host mode and the host-user mode concurrently. Namely, a lower-layer security protocol transfer channel may carry the management data of multiple users and the management data in the host-to-host mode concurrently.

In the final analysis, under the present disclosure, a secure transfer channel is established between the management station and the managed device; the managed device authenticates the management station; and information is exchanged between the management station and the managed device through the secure transfer channel. In this way, only one communication channel is required between the management station and the same managed device, thus saving system overhead.

The embodiment of the present disclosure performs layering of the upper-layer management protocol and the lower-layer security protocol, introduces an AAA system, and combines them organically; and provides a basic security model for various management protocols. Therefore, the management protocols that will emerge in the future can be integrated into this security framework conveniently.

The present disclosure proposes to establish a management channel between the management station and the managed device and separate the management channel for alarms from the management channel for configuration information, thus simplifying the creation of alarm management channels and the authentication process.

Although the disclosure has been described through some preferred embodiments, the disclosure is not limited to such embodiments. It is apparent that those skilled in the art can make various modifications and substitutions to the disclosure without departing from the spirit and scope of the disclosure. The disclosure is intended to cover the modifications and substitutions provided that they fall in the scope of protection defined by the following claims or their equivalents.

## Claims

1. A management network security framework, including:
a management station, adapted to: establish a secure transfer channel between the management station and a managed device; and exchange information with the managed device through the secure transfer channel; and
the managed device, adapted to: establish the secure transfer channel between the management station and the managed devices; authenticate the management station; and exchange information with the management station through the secure transfer channel.

2. The management network security framework of claim 1, further comprising:
an Authentication Authorization and Accounting (AAA) server, adapted to: authenticate the management station according to a received authentication request; perform user information authentication and/or access control authorization for the user according to the packet carrying the authentication information and/or authorization information.

3. The management network security framework of claim 1, wherein the management station comprises:
a lower-layer security protocol client, adapted to: negotiate security parameters with the lower-layer security protocol server in the managed devices; establish a lower-layer security protocol transfer channel with the managed device, wherein the authentication information for authenticating the management station is carried in the negotiation; and
an upper-layer management protocol client, adapted to: send a packet carrying the authentication information and/or authorization information to the upper-layer management protocol server in the managed devices through a lower-layer security protocol transfer channel by means of an upper-layer protocol; and perform information interaction with the managed device by using the lower-layer security protocol transfer channel.

4. The management network security framework of claim 3, wherein the upper-layer management protocol client further comprises:
a management channel processing module, adapted to: establish and maintain management channels connected to the managed devices in the lower-layer security protocol transfer channel through an upper-layer management protocol; and transfer the user-related management information and user-unrelated management information respectively through the management channels.

5. The management network security framework of claim 3, wherein the management station further comprises:
an AAA client, adapted to send a packet carrying the authentication information and/or authorization information to the AAA server, and request to authenticate and/or authorize the user.

6. The management network security framework according to any of claim 1 to claim 5, wherein the managed devices comprise:
a lower-layer security protocol server, adapted to: negotiate the security parameters with the lower-layer security protocol client in the management station; send a management station authentication request to the AAA client; and establish a lower-layer security protocol transfer channel between the lower-layer security protocol server and the management station;
an upper-layer management protocol server, adapted to: receive a packet carrying the authentication information and/or authorization information from the upper-layer management protocol client in the management station; send the received packet to the AAA client; and perform information interaction with the managed device by using the lower-layer security protocol transfer channel; and
the AAA client: transfer the authentication request sent by the lower-layer security protocol server to the AAA server; transfer the packet carrying the authentication information and/or authorization information sent by the upper-layer management protocol server to the AAA server; and request to authenticate and/or authorize the user.

7. The management network security framework according to any of claim 1 to claim 5, wherein the managed devices comprise:
a lower-layer security protocol server, adapted to: negotiate the security parameters with the lower-layer security protocol client in the management station; send a management station authentication request to the AAA server; and establish a lower-layer security protocol transfer channel between the lower-layer security protocol server and the management station;
an upper-layer management protocol server, adapted to: receive a packet carrying the authentication information and/or authorization information from the upper-layer management protocol client in the management station; send the received packet to the AAA server; and perform information interaction with the managed device by using the lower-layer security protocol transfer channel; and
the AAA server, adapted to: authenticate the management station according to the authentication request sent by the lower-layer security protocol server; and perform user information authentication and/or access control authorization for the user according to the packet carrying the authentication information and/or authorization information sent by the upper-layer management protocol server.

8. A method for processing information of a management network security framework, comprising:
establishing a secure transfer channel between a management station and a managed device, and authenticating the management station; and
using the secure transfer channel to exchange information between the management station and the managed device.

9. The method of claim 8, wherein the process of establishing a secure transfer channel between the management station and the managed device and authenticating the management station comprises:
establishing a secure communication channel between the management station and the managed device through a lower-layer security protocol, and authenticating the management station through an AAA server.

10. The method of claim 9, wherein the process of establishing the secure communication channel between the management station and the managed device through the lower-layer security protocol and authenticating the management station through the AAA server comprises:
negotiating security parameters between a lower-layer security protocol client in the management station and a lower-layer security protocol server in the managed device to determine the security parameters required for ensuring data confidentiality and integrity, wherein authentication information for authenticating the management station is carried in the negotiation;
obtaining, by the lower-layer security protocol server in the managed device, the authentication information, sending a management station authentication request to the AAA server; if the authentication fails, notifying the authentication failure causes to the lower-layer security protocol client and terminating the subsequent operation; otherwise, establishing a lower-layer security protocol transfer channel between the management station and the managed device.

11. The method of claim 8, claim 9 or claim 10, wherein the process of establishing the secure transfer channel between the management station and the managed device for the purpose of information interaction comprises:
sending, by the management station, a user authentication request and/or an authorization request to the AAA server through the managed device by using the security transfer channel; after the authentication request and the authorization request are approved, performing information interaction with the managed device through the security transfer channel.

12. The method of claim 11, comprising:
sending, by an upper-layer management protocol client in the management station, a packet carrying the authentication information to the upper-layer management protocol server in the managed devices through a lower-layer security protocol transfer channel;, sending, by the upper-layer management protocol server, an authentication request for the user to the AAA server;
after the authentication request is approved, sending, by the upper-layer management protocol client, a packet carrying the authorization information to the upper-layer management protocol server through a lower-layer security protocol transfer channel; sending, by the upper-layer management protocol server, an authorization request for the user to the AAA server; and
after the authorization request is approved, by the management station, exchanging information with the managed device through a lower-layer security protocol transfer channel.

13. The method of claim 8, claim 9 or claim 10, wherein the process of establishing the secure transfer channel between the management station and the managed device for the purpose of information interaction further comprises:
sending, by an AAA client in the management station, a packet carrying the authentication information and/or authorization information to the AAA server, and request to authenticate and/or authorize the user.

14. The method of claim 8, claim 9 or claim 10, wherein the process of establishing the secure transfer channel between the management station and the managed device for the purpose of information interaction further comprises:
establishing and maintaining, by the management station, management channels in the lower-layer security protocol transfer channel through an upper-layer management protocol, and using this management channels to transfer management information from or to the managed device.

15. The method of claim 14, wherein the management channels comprise:
management channel in the host-to-user mode, adapted to transmit the user-related management information; and management channel in the host-to-host mode, adapted to transmit user-unrelated management information.

16. The method of claim 15, wherein the_management channel in the host-to-user | mode performs user authentication through an upper-layer management protocol, and the management channel in the host-to-host mode performs host authentication through a security protocol.
